# EUROPEAN PATENT APPLICATION

(11) **EP 4 582 577 A2**
(43) Date of publication of application: **09.07.2025**
(21) Application number: 24218138.6
(22) Date of filing: 06.12.2024
(51) Int. Cl.: C22C 38/44, C22C 38/46, C22C 38/48, C22C 38/54, C22C 38/04, C22C 38/02, C22C 38/00, C22C 38/56, C22C 38/52, C22C 38/42, C22C 33/04, C21D 6/00, C21D 6/02, C21D 1/18

(54) **IRON-BASED HEAT AND CORROSION RESISTANT ALLOY WITH ENHANCED AIR QUENCHABILITY**

(30) Priority: 08.12.2023 US 202318534501
(71) Applicant: L.E. Jones Company, Menominee, MI 49858 (US)
(72) Inventor: QIAO, Cong Yue, Menominee, 49858 (US); DOLL, David M., Fort Worth (TX), 76126 (US)
(74) Representative: Abitz & Partner

(57) **Abstract**

An iron-based corrosion resistant and wear resistant alloy. The alloy can comprise (in weight percent) about 0.005-0.5% boron, about 1.2-1.8% carbon, about 0.7-1.5% vanadium, about 7-11% chromium, about 1-3.5% niobium, about 6-11% molybdenum, about 3-10% nickel and the balance including iron and incidental impurities. Alternatively, the Nb content can be replaced or combined with Ti, Zr, Hf and/or Ta such that 1%<(Ti+Zr+Nb+Hf+Ta)≦3.5. The alloy has improved hot hardness and high temperature compressive strength and is suitable for use in elevated temperature applications such as in diesel valve seat inserts.

## Description

### BACKGROUND

More restrictive exhaust emissions laws for diesel engines have driven changes in engine design including the need for high-pressure electronic fuel injection systems. Engines built according to the new designs use higher combustion pressures, higher operating temperatures and less lubrication than previous designs. Components of the new designs, including valve seat inserts (VSI), have experienced significantly higher wear rates. Exhaust valve seat inserts and valves, for example, must be able to withstand a high number of valve impact events and combustion events with minimal wear (e.g., abrasive, adhesive and corrosive wear). This has motivated a shift in materials selection toward materials that offer improved wear resistance relative to the valve seat insert materials that have traditionally been used by the diesel industry.

Another emerging trend in diesel engine development is the use of EGR (exhaust gas recirculation). With EGR, exhaust gas is routed back into the intake air stream to reduce nitric oxide (NOx) content in exhaust emissions. The use of EGR in diesel engines can raise the operating temperatures of valve seat inserts. Accordingly, there is a need for lower cost exhaust valve seat inserts having good hot hardness for use in diesel engines using EGR.

Also, because exhaust gas contains compounds of nitrogen, sulfur, chlorine, and other elements that potentially can form acids, the need for improved corrosion resistance for alloys used in exhaust valve seat insert applications is increased for diesel engines using EGR. Acid can attack valve seat inserts and valves leading to premature engine failure. Earlier attempts to achieve improved corrosion resistance were pursued through the use of martensitic stainless steels. Though these steels provide good corrosion resistance, conventional martensitic stainless steels do not have adequate wear resistance and hot hardness to meet the requirements for valve seat inserts in modern diesel engines.

Alloy J130 (available from L.E. Jones Company, and described in U.S. Patent No. 6,702,905) has been widely used for valvetrain component applications due to its high wear resistant performance at elevated temperature and sustainable materials and manufacturing cost compared to conventional valvetrain component alloys such as nickel-based J70, J96 and J100 and cobalt-based alloys J3 and J10. Alloy J130 contains fine solidification substructure that can be quenched and tempered into tempered martensitic structure in intragranular region. The intergranular region is strengthened by borides and precipitation carbides during tempering treatment. Alloy J130 is air quenchable that the process is preferred compared to popular solvent quenching practice from an environmentally friendly process, safety operation, and automation easy considerations. However, despite the improvements in materials performance to date, there is still need for high performance materials having improved compressive yield strength at elevated temperatures.

### SUMMARY

In an embodiment, an iron-based alloy having a martensitic microstructure including primary and secondary carbides comprises, in weight percent (wt.%): about 0.005 to 0.5% boron; about 1.2 to 1.8% carbon; about 0.7 to 1.5% vanadium; about 7 to 11% chromium; about 1 to 3.5% niobium; about 6 to 11% molybdenum; about 3 to 10% nickel; and balance including about 60 to 80% iron and incidental impurities. In an embodiment, an iron-based alloy having a martensitic microstructure including primary and secondary carbides consists essentially of, in weight percent (wt.%): about 0.005 to 0.5% boron; about 1.2 to 1.8% carbon; about 0.7 to 1.5% vanadium; about 7 to 11% chromium; about 1 to 3.5% niobium; about 6 to 11% molybdenum; about 3 to 10% nickel; and balance including about 60 to 80% iron and incidental impurities. In an embodiment, an iron-based alloy having a martensitic microstructure including primary and secondary carbides consists of, in weight percent (wt.%): about 0.005 to 0.5% boron; about 1.2 to 1.8% carbon; about 0.7 to 1.5% vanadium; about 7 to 11% chromium; about 1 to 3.5% niobium; about 6 to 11% molybdenum; about 3 to 10% nickel; and balance including about 60 to 80% iron and incidental impurities.

According to various options, (a) the alloy is tungsten-free, the nickel content is about 4 to 9% and the iron content is about 60 to 80%, (b) the alloy includes up to about 1.6% Si and/or up to about 2% Mn, (c) the boron content is about 0. 1 to 0.3% and the iron content is about 60 to 70%; (d) the carbon content is about 1.4 to 1.8% and the nickel content is about 4 to 8%; (e) the vanadium content is about 0.8 to 1%; (f) the chromium content is about 9 to 11%; (g) the niobium content is about 1 to 2.5%; (h) the molybdenum content is about 8 to 10%; (i) the alloy includes up to about 4% cobalt; (j) the alloy includes about 1.5 to 2.5% cobalt; (k) copper is substituted partially or completely for cobalt; (l) the contents, in weight percent, of the boron, vanadium and niobium are represented by B, V and Nb, respectively, and satisfy the following condition: 1.9%<(B+V+Nb)<4.3%; (m) the alloy is in a hardened and tempered condition; (n) the primary carbides have a width smaller than about 10 microns and the secondary carbides are smaller than about 1 micron; (o) the alloy is in the form of a casting; (p) the alloy is in a hardened and tempered condition having a hardness of at least about 42 Rockwell C; (q) the alloy is in a hardened and tempered condition and exhibits a Vickers hot hardness at a temperature of 800° F. of at least about 475; (r) the alloy is in a hardened and tempered condition and exhibits a high temperature compressive yield strength at 800° F. of at least about 190 ksi; and/or (s) the alloy exhibits a dimensional stability of less than about 0.5×10-3 inches after 20 hours at 1200° F.

In an embodiment, a part for an internal combustion engine comprises the iron-based alloy described above optionally in the form of a casting, pressed and sintered compact, coating or part such as a ball bearing. For example, the part can be a valve seat insert for an engine such as a diesel engine optionally using EGR.

### BRIEF DESCRIPTION OF THE DRAWINGS

Figure 1 is a graph showing latent heat measurement results for six heats of an alloy system evaluated.
Figure 2 is a graph showing the effect of nickel content to time measured between the primary liquid to solid and solid to solid phase transformation.
Figure 3 is a graph showing the effect of nickel on the melting temperature of an alloy system referred to herein as the "J130" alloy system.
Figure 4 is a graph showing the cooling time from melting temperature to solid phase transformation temperature.
Figure 5 is a graph showing bulk hardness as a function of tempering temperature.
Figure 6 is a graph showing radial crush toughness as a function of tempering temperature.
Figure 7 is a graph showing the effect of nickel content to the air quench-ability of the J130 alloy system.
Figure 8 is a graph showing air quench-ability as a function of nickel content in the J130 alloy system.
Figure 9 is a graph showing the ranking of air quench-ability for the alloys studied.
Figure 10 is a graph showing wear resistance of alloys having 0.62wt.% Ni, 4.88wt.% Ni, and a standard J130 alloy.
Figure 11 is a graph of compressive yield strength as a function of temperature for the alloys studied.
Figure 12 is a graph of compressive yield strength as a function of nickel content in the alloys studied.

### DETAILED DESCRIPTION

In the following discussion, the J130 alloy system is investigated with a goal of achieving higher hardenability for wear resistant related applications. This idea is supported by fundamental metallurgical principles that a stabilized austenite stage prior to a quenching process benefits consistency of quenching result. It is also based upon the basic metallurgy of austenitic stainless steels that martensite will not form when the nickel content reaches to a certain level. Hence, in the following discussion, nickel additions are evaluated from both a hardness/strength and toughness enhancement aspect. An alloy system with enhanced wear resistance can make a significant contribution to performance of valvetrain designs in internal combustion ("IC") engine applications including methanol and hydrogen fueled IC engines.

In the following discussion, the effect of nickel content on air quenchability is evaluated over a Ni range of no nickel (Ni) addition to 12.5wt.% Ni addition. All of the samples evaluated were cast with a 150lb induction melting furnace with proper raw materials furnace charging. Two reference J130 heats (7B15G and 3B24XA), one reference J120V heat, and one reference J160 heat were made with a 750lb induction melting furnace according to standard alloy production methods. The J130, J120V, and J160 sample heats used for hardenability assessment are summarized in Table 1.

Heat treatment of the samples was carried out using heat treatment furnaces at the L.E. Jones ("LEJ") Casting Prototype Center for hardening and tempering treatments. Each sample was enclosed in a stainless steel envelope prior to being placed in the heat treatment ovens.

**Table 1. Composition of experimental and reference heats.**

| Allo y | Heat Numb er | C | Mn | Si | Ni | Cr | Mo | V | Nb | P | S | N | B | Fe |
|---|---|---|---|---|---|---|---|---|---|---|---|---|---|---|
| J130 | 7B15 G | 1.5 3 | 0.4 89 | 0.9 00 | 1.0 7 | 9.9 7 | 9.1 3 | 1.1 4 | 1.8 6 | 0.01 7 | 0.0 10 | 0.05 0 | 0.1 90 | bal |
| J130 | 9K12 M | 1.5 5 | 0.3 91 | 1.0 10 | 0.9 5 | 10. 01 | 9.4 9 | 1.2 3 | 1.9 9 | 0.01 7 | 0.0 12 | 0.04 1 | 0.2 01 | bal |
| J130 M | 3A23 XB | 1.5 9 | 0.3 64 | 0.8 90 | 0.2 1 | 10. 18 | 9.6 4 | 1.1 2 | 1.8 3 | 0.01 7 | 0.0 16 | 0.03 2 | 0.2 08 | bal |
| J130 M | 3A24 XA | 1.6 6 | 0.3 57 | 1.0 10 | 0.0 9 | 9.9 7 | 9.2 9 | 1.1 4 | 1.5 7 | 0.01 6 | 0.0 12 | 0.03 4 | 0.2 21 | bal |
| J130 | 3B24 Q | 1.6 2 | 0.3 94 | 1.0 10 | 1.0 1 | 9.9 6 | 9.2 6 | 1.2 2 | 1.8 7 | 0.01 8 | 0.0 13 | 0.01 9 | 0.2 03 | bal |
| J130 M | 3B16 XA | 1.5 9 | 0.3 30 | 0.8 88 | 2.5 6 | 9.8 7 | 9.2 5 | 1.1 2 | 1.9 7 | 0.01 7 | 0.0 12 | 0.07 1 | 0.1 88 | bal |
| J130 M | 3B16 XB | 1.6 6 | 0.3 68 | 0.9 62 | 2.6 9 | 9.8 0 | 9.3 0 | 1.1 8 | 1.9 5 | 0.01 7 | 0.0 12 | 0.02 6 | 0.1 97 | bal |
| J130 M | 3B17 XA | 1.4 8 | 0.3 29 | 0.9 60 | 4.9 5 | 9.8 9 | 8.9 6 | 1.1 3 | 1.7 8 | 0.01 5 | 0.0 12 | 0.07 3 | 0.1 73 | bal |
| J130 M | 3A25 XA | 1.5 4 | 0.4 24 | 0.9 33 | 4.0 8 | 9.8 0 | 9.1 5 | 1.1 6 | 1.9 0 | 0.01 4 | 0.0 15 | 0.03 6 | 0.2 10 | bal |
| J130 M | 3A25 XB | 1.5 9 | 0.0 44 | 0.9 37 | 4.8 8 | 9.5 5 | 9.1 5 | 1.1 5 | 1.7 9 | 0.01 3 | 0.0 13 | 0.03 4 | 0.2 02 | bal |
| J130 M | 3B02 XA | 1.5 2 | 0.2 82 | 0.9 12 | 5.0 8 | 9.9 5 | 9.1 5 | 1.1 7 | 1.7 9 | 0.01 6 | 0.0 15 | 0.03 9 | 0.1 80 | bal |
| J130 M | 3B02 XB | 1.5 8 | 0.4 04 | 1.0 80 | 7.6 3 | 9.7 0 | 9.5 0 | 1.2 0 | 1.8 3 | 0.01 3 | 0.0 16 | 0.02 7 | 0.2 00 | bal |
| J130 M | 3B03 XA | 1.5 7 | 0.3 19 | 0.9 51 | 7.4 1 | 9.6 1 | 9.2 9 | 1.1 7 | 1.8 8 | 0.01 1 | 0.0 13 | 0.03 8 | 0.1 77 | bal |
| J130 M | 3B07 XA | 1.5 6 | 0.4 63 | 1.0 40 | 10. 62 | 9.6 2 | 9.3 2 | 1.1 8 | 1.8 6 | 0.01 1 | 0.0 16 | 0.03 0 | 0.1 98 | bal |
| J130 M | 3B07 XB | 1.4 4 | 0.3 04 | 1.0 20 | 10. 06 | 9.7 8 | 9.1 4 | 1.1 7 | 1.7 4 | 0.01 1 | 0.0 13 | 0.03 4 | 0.1 72 | bal |
| J130 M | 3B10 XA | 1.4 8 | 0.3 22 | 0.8 98 | 11.6 8 | 9.8 0 | 9.1 2 | 1.1 6 | 1.7 1 | 0.01 4 | 0.0 19 | 0.05 2 | 0.1 70 | bal |
| J130 M | 3B10 XB | 1.5 8 | 0.3 76 | 0.9 54 | 11.9 7 | 9.5 5 | 9.2 0 | 1.1 7 | 1.8 4 | 0.01 4 | 0.0 10 | 0.01 8 | 0.1 89 | bal |
| J120 V | 2K01 W | 1.3 0 | 0.3 66 | 0.4 23 | 0.1 46 | 3.9 0 | 6.4 8 | 1.4 7 | 0.0 3 | 0.01 6 | 0.0 12 | 0.03 6 | 0.0 08 | bal |
| J160 | 3E26A | 1.4 9 | 0.2 30 | 0.4 52 | 0.3 81 | 12. 54 | 5.3 1 | 0.1 2 | 1.7 8 | 0.01 1 | 0.0 09 | 0.06 1 | 0.0 08 | bal |

All the heats were analyzed using LEJ Spectrometer units with respective alloy analysis method and reference type standard. It can be noted that in addition to the differences in Ni content, there is a small variation in the remaining alloying elements incidental to the experimental procedure. The effect of Ni on the air quench-ability of the samples was investigated per the idea that nickel can lower the eutectoid reaction temperature and reduce the percentage of intercellular region in the J130 alloy system.

Another concept under investigation is the potential formation of FesNi, FeNi₂, and FeNi₃ in the J130 alloy system when the alloy system has an adequate nickel content. Hence, the following discussion examines a range of nickel content from 0.09wt.% (incidental) through 12.0wt%. Among these heats, Heats 7B15G, 9K12M, and 3B24Q are with standard J130 alloy composition adopted for a comparative evaluation purpose.

### Latent Heat Measurement and Alloy Melting Temperature

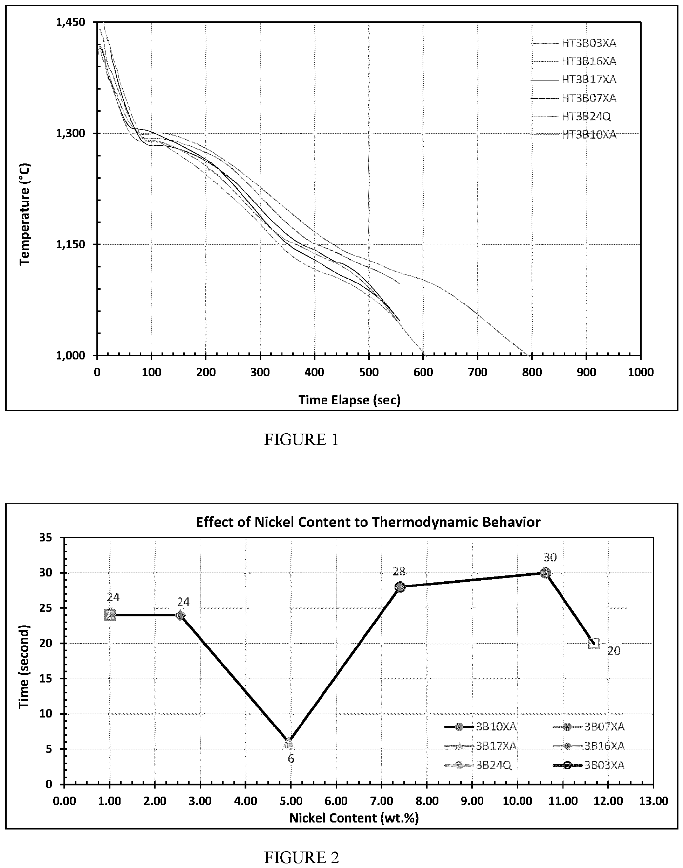

The latent heat measurement was performed using six heats from the Experiments and References listed in Table 1. The measurements were carried out utilizing a standard LEJ thermocouple set built for latent heat measurement application along with the standard LEJ latent heat measurement procedure. The results of latent heat measurement are exhibited in Figure 1. Among the six heats tested, Heat 3B24Q with the lowest nickel content displayed the highest temperature related to the liquid state to solid state phase transformation while Heat 3B10XA with the highest nickel content displayed the lowest temperature related to the liquid state to solid state phase transformation. The basic shape of the six temperature-time curves is similar and, most likely, there is a solid-state phase transformation taken place around 1110°C to 1150°C temperature range.

The latent heat measurement results applying temperature-time elapse results manifested that two major phase-transformations took place for all the Experiments and Reference samples evaluated from liquid state (> 1400°C) to 1000°C including bulk liquid to solid (1283°C ~ 1306°C) and solid-state phase transformations in a temperature range between 1115°C and 1150°C. It was also likely a hint of liquid to solid phase formation within a temperature range between 1375°C and 1389°C that was most likely related to peritectic reaction resulting in α ferrite formation in liquid metal. As a result, Heat 3B17A (4.95wt.% Ni) displayed the highest melting temperature at approximate 1306°C while Heat 3B02XA (7.63wt.% Ni) displayed the lowest melting temperature at approximate 1299°C followed by Heat 3B16XA (2.56wt.% Ni) at approximate among the heats evaluated. A summary of the melting measurement results is tabulated in Table 2.

**Table 2. Summary of melting temperature for six heats evaluated**

| Heat | Ni wt.% | Melting Temperature | |
|---|---|---|---|
| | | °F | °C |
| 3B24Q | 1.0 | 2351 | 1288 |
| 3B16XA | 2.6 | 2371 | 1299 |
| 3B17XA | 5.0 | 2383 | 1306 |
| 3B07XA | 10.6 | 2342 | 1283 |
| 3B10XA | 12.0 | 2354 | 1290 |
| 3B03XA | 7.4 | 2359 | 1293 |

The time between major liquid to solid (1285° ~ 1305°C) and solid to solid phase transformation was measured for the six heats adopted for the latent heat investigation with the results shown in Figure 2. The nickel content showing most effective reduction in time between two major phase transformations (liquid to solid and primary solid to solid) was between 2.65wt.% Ni and 7.41wt.% Ni, most likely in the vicinity of the Experimental heat with 4.95wt.% Ni. A shorter time span between the liquid-solid and primary solid-solid phase transformation implies that fewer solid-state phase transformation is involved. For instance, only austenite to martensitic phase transformation occurred within the time span. Hence, a higher percentage of martensitic phase could be achieved in the alloy system containing approximate 5 wt.% of nickel owing to a martensitic phase formation from austenite which is not a diffusion-controlled process.

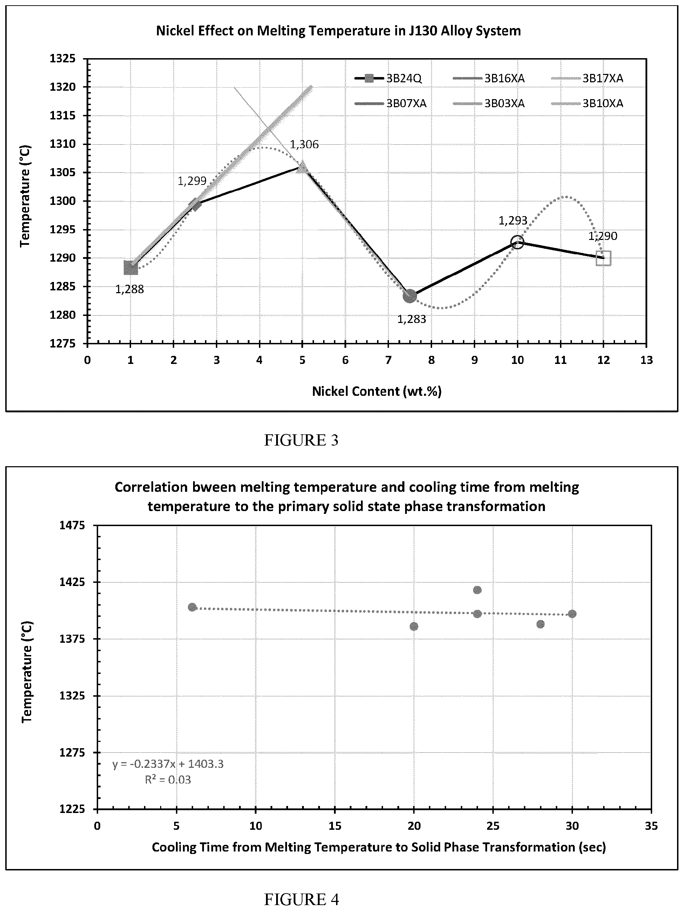

Figure 3 shows the melting point as a function of nickel content. Heat 3B17XA possessed the highest melting point while 3B07XA possessed the lowest melting point. Based upon the results, the highest melting temperature should exist in the alloy system with a nickel content range between 2.0wt.% and 5.0wt.%, such as between 4.0wt.% and 4.25wt%. Hence, it is expected that the time elapse between the melting point to the primary solid state phase transformation for the alloy reaches the shortest time span when the nickel content is within the range of 4.00 wt.% to 4.25 wt.%.

Figure 4 shows the correlation between time elapse from melting temperature to the primary solid state phase transformation. As revealed in Figure 4, it was essentially no simple correlation between melting temperature and the time elapse from melting temperature to primary solid state phase transformation. The results demonstrate that the variation of melting temperatures in these experiments did not have a major effect on cooling time between liquid-solid and primary solid-solid phase transformations in the alloy system.

### Behavior of Temper Response

The effect of nickel content on temper response was evaluated with seven different heats from 25°C through 900°C and a total of three hours thermal soaking was applied for all the tests. The samples used for this temper response investigation were in a ring shape with dimensions of 1.935" OD, 1.750" ID, and 0.3050" height. Radial crush tests were conducted by pressing on the OD surface applying a tensile tester until the sample was ruptured.

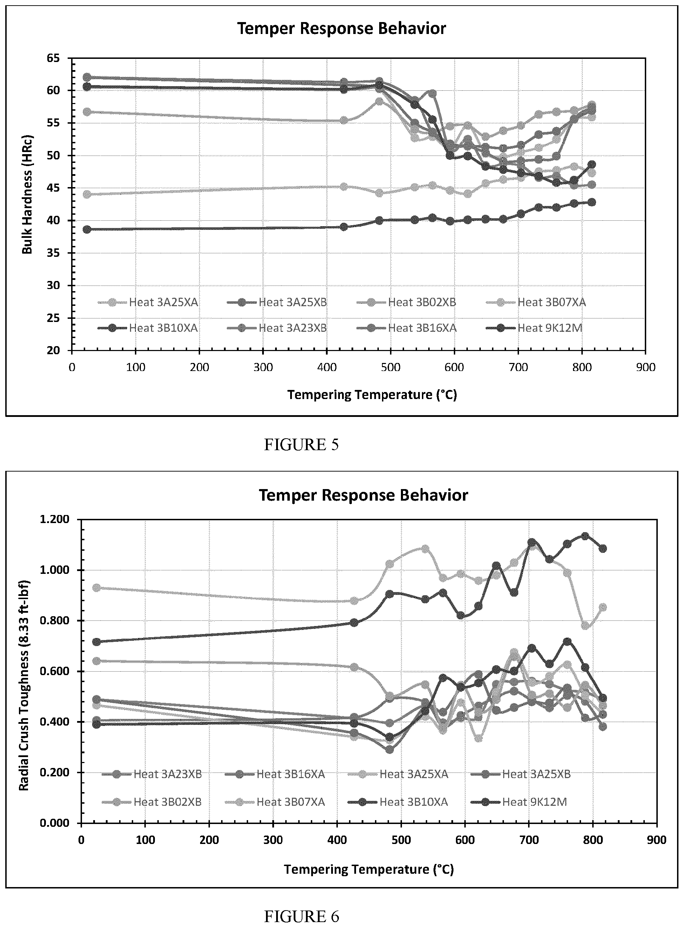

Figure 5 shows bulk hardness as a function of tempering temperature for samples made with seven Experiments and a Reference J130. For heats 3B07XA and 3B10XA, the nickel content was 10.62wt.% and 11.68wt.%, respectively. Both samples exhibited a gradual change in bulk hardness as tempering temperature increased. It is believed that the increment of bulk hardness for these two samples was related to a precipitation hardening phenomenon without involving bulk matrix solid phase transformation. Based on the results, Heat 3B07XA showed constantly higher hardness through the entire tempering temperature range applied compared to Heat 3B10XA. It appears that the overall hardness and strength of these two samples were involved in both solid solution strengthening and precipitation strengthening mechanisms.

The Experiment with Heat 3B02XB which had 7.63wt.% Ni exhibited a small bulk phase transformation. The Experiment displayed somewhat lower bulk hardness compared to the other four Experiments with lower nickel content except when temperature reached to approximately 593°C. Within the temperature range between 593°C to 816°C, Experiment Heat 3B02XB possessed greater bulk hardness than those Experiments having lower nickel content.

The remaining four Experiments and Reference all showed a significant bulk phase transformation within the thermal treatment. For Experiment 3A23XA and Reference, bulk hardness lowered sharply and continuously starting at approximate 550°C. Experiments 3A25XA (4.08wt.% Ni), 3A25XB (4.88wt.% Ni), and 3B 16XA (2.56wt.% Ni) along with Reference (slightly) exhibited a "U" bulk hardness curve in the tempering temperature range between 550°C and 825°C likely due to rehardening when the thermal treatment temperature was above approximately 760°C.

Figure 6 shows the effect of Ni on radial crush toughness in the alloy system evaluated. Two heats containing greater than 10 wt.% Ni show an obviously greater radial crush toughness than the heats with lower than 10 wt.% Ni content. The other four heats displayed a similar radial crush toughness although Heat 3B02XB with 7.63wt.% Ni resided, at large, on a high position of the five radial crush toughness versus tempering temperature band.

Considering both bulk hardness response and radial crush response shown in Figures 5 and 6, the alloy system within a nickel content range of 4.88wt.% Ni to 7.63wt.% Ni showed a desirable hardness and toughness combination at ambient and elevated temperatures for intended VSI applications and the like.

### Air Quench-ability Analysis

Air quench-ability analysis was carried out using the air quench-ability test method developed at LEJ. The test specimen is with a dimension of 3.5" long and 1.0" in diameter cylinder in as-cast condition. The sample is placed in laboratory oven for one hour thermal soaking at 850°C then followed by a test end quench with compressed air for five minutes. The compressed air is applied on the quench end of the cylinder samples with at 5.6 m/s flow rate. The bulk hardness measurements were carried out from quenching end to opposite end with a small flat area prepared on the OD surface adopting water cooled grinding process.

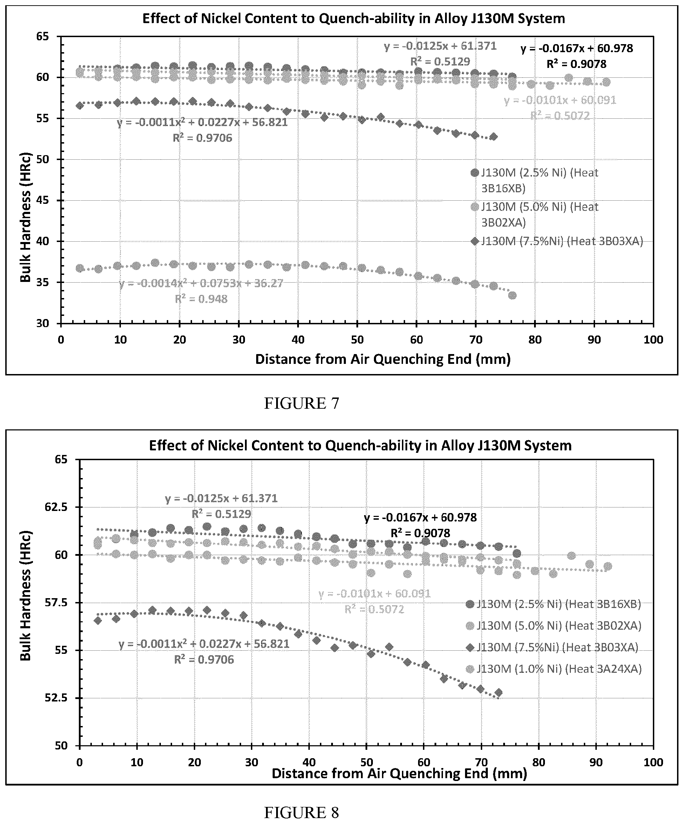

Figures 7 and 8 show the effect of nickel content on the alloy system quench-ability. As manifested in these figures, when nickel content was at or greater than 7.63wt.%Ni, the hardness and quench-ability were relatively low. When nickel was within a range of 0.09wt.% to 5.08wt.%, an increment in nickel content increased in hardenability of the alloy system.

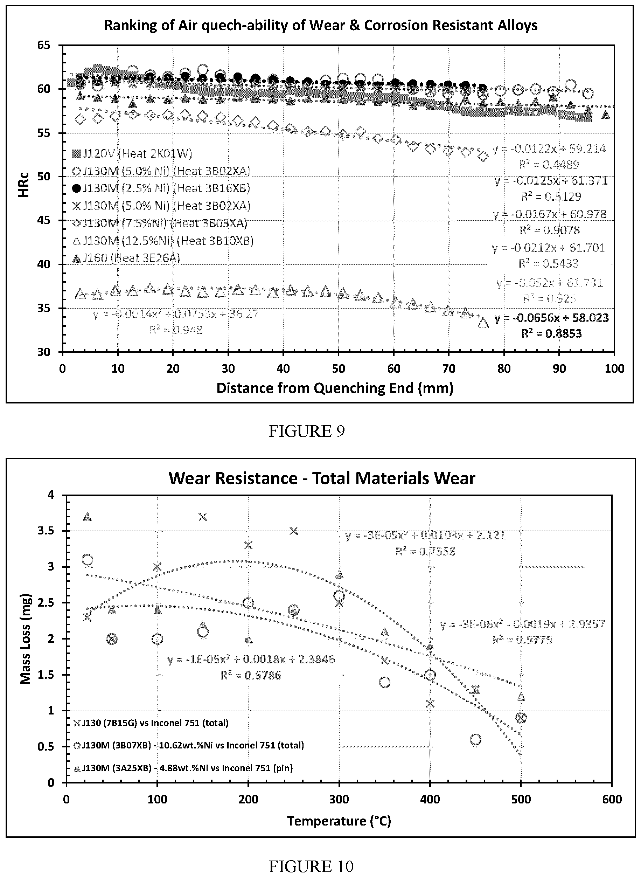

Figure 9 displays a comparation of air quench-ability of J130M experiments, reference J130, J120V, and J160 alloys. Clearly, the samples of J130M with 2.5 to 5.0wt.% of nickel addition demonstrated the highest quench-ability among the alloys assessed.

### Plint Wear Test

A standard LEJ Plint test method was applied for the wear resistance evaluation and the test procedures include 100,000 duration cycles, 20N applied load, 1.0 mm reciprocating distance, 20Hz reciprocating frequency, and non-lubrication test condition.

Figure 10 shows Plint wear resistant test results for Reference 7B15G (J130 - 1.07wt.% Ni production heat) and Experiments 3B07XA (10.62wt.% Ni) and 3A25XB (4.88wt.% Ni) in terms of total materials loss (pin plus plate wear) as paired with a common nickel-based valve material, Inconel 751. The results depicted that the higher nickel content Experiments 3B07XA and 3A25XB possessed an overall greater wear resistance than the reference J130 alloy.

### Compressive Yield Strength (CYS) Tests

Samples made with five experimental heats i.e., 3B17XA, 3B03XA, 3B16XA, 3B07XA, and 3B10XA were adopted for the compressive yield strength evaluation. These experimental heats varied in nickel content in order to investigate nickel effect on the mechanical property of the alloy system. Table 3 summarizes the compression test results in which Heat 1 is 3B17XA, Heat 2 is 3B03XA, Heat 3 is 3B16XA, Heat 4 is 3B07XA and Heat 5 is 3B10XA in Table 1.

**Table 3. Summary of J130M compressive yield strength (ksi) testing results.**

| Heat | Ni wt.% | ambient | 200°F | 400°F | 600°F | 800°F | 900°F | 1000°F | 1100°F | 1200°F |
|---|---|---|---|---|---|---|---|---|---|---|
| 1 | 4.95 | 240.5 | 226.5 | 226.5 | 203.8 | 206.0 | 207.1 | 186.5 | 106.3 | 67.8 |
| 2 | 7.41 | 215.7 | 216.8 | 207.9 | 206.2 | 191.9 | 177.0 | 127.7 | 83.8 | 67.4 |
| 3 | 2.56 | 146.6 | 132.7 | 132.7 | 126.7 | 120.0 | 114.0 | 101.3 | 77.9 | 72.6 |
| 4 | 10.62 | 115.9 | 112.6 | 112.6 | 95.9 | 99.4 | 98.5 | 85.6 | 75.8 | 57.3 |
| 5 | 11.68 | 96.0 | 94.1 | 85.4 | 86.6 | 81.2 | 79.8 | 71.9 | 67.5 | 71.3 |

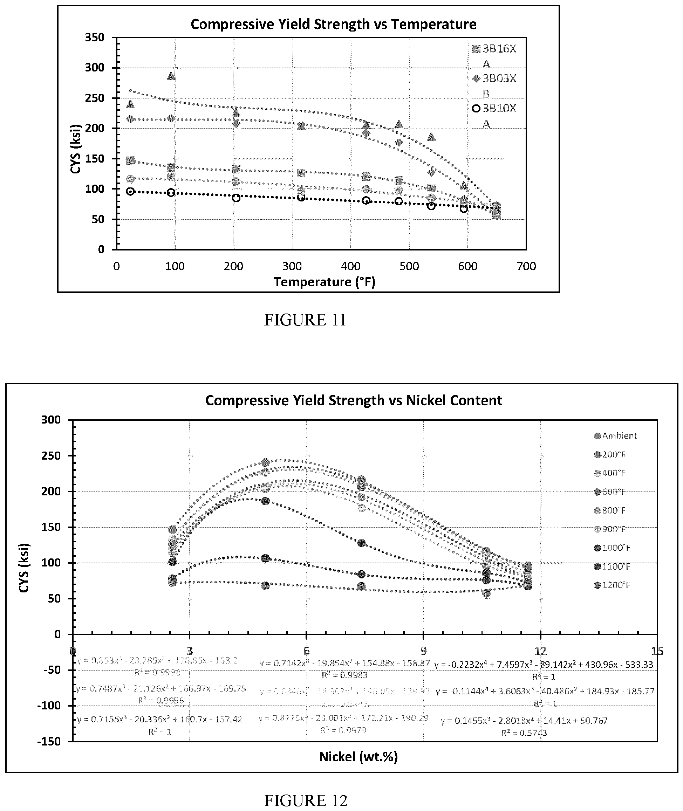

Figure 11 exhibits compressive yield strength as a function of temperature for the five J130M experiments. Two heats with 4.95wt.% Ni and 7.41wt.% Ni respectively possessed much higher compressive yield strength compared the other three experiments with 2.56wt.% Ni, 10.62wt.% Ni and 11.68wt.% Ni content, respectively. Based upon the compressive yield strength results, J130M (an iron base alloy with about 0.005 to 0.5wt.% B, about 1.2 to 1.8wt.% C, about 0.7 to 1.5wt.% V, about 7 to 11wt.% Cr, about 1 to 3.5wt.% Nb, about 6 to 11wt.% Mo, balance about 60 to 80wt.% Fe and incidental impurities) with about 3 to 10wt.% Ni, preferably about 4 to 9wt.% Ni, and most preferably about 4 to 8wt.% Ni is the most preferred for a consideration of achieving a high mechanical strength.

Figure 12 displays the compressive yield strength as a function of nickel content for all nine test temperatures evaluated. Among the nine regression equations, the maximum CYS of the curves from ambient through 900°F occurred when nickel content was approximately 5.45wt.%. For the regression equations of 1000°F and 1100°F, the maximum CYS was reached when nickel content was approximately 4.25wt.%. For 1200°F test, no clear effect of nickel content on CYS was detected. Based upon the result of compression yield strength vs nickel content, nickel content range of 4.25wt.% to 5.45wt.% can ensure the alloy system with 100 ksi or greater compressive yield strength within a temperature range of ambient through 1100°F. Hence, nickel content within 4.25wt.% through 5.45wt.% is preferred for high wear resistance applications.

From the CYS test data, it can be observed that for Ni contents of 4 to 8wt.% Ni, the samples exhibited compressive yield strengths of over 170 ksi at temperatures ranging from ambient to 900°F compared to samples with lower and higher Ni contents which had a maximum of 114 ksi (2.56wt.% Ni) and 98.5 ksi (10.62wt.% Ni) over the temperature range of ambient to 900°F. The CYS test data shows that there is an unexpected increase in compressive yield strength for J130 alloys with increased Ni contents in the range of about 3-10wt.% Ni, preferably about 4-9wt.% Ni and most preferable about 4-8wt.% Ni. Accordingly, for iron base alloys with about 0.005 to 0.5wt.% B, about 1.2 to 1.8wt.% C, about 0.7 to 1.5wt.% V, about 7 to 11wt.% Cr, about 1 to 3.5wt.% Nb, about 6 to 11wt.% Mo, balance about 60 to 80wt.% Fe and incidental impurities, the alloy can include 3 to 4wt.% Ni, 4 to 5wt.% Ni, 5 to 6wt.% Ni, 6 to 7wt.% Ni, 7 to 8wt.% Ni, 8 to 9wt.% Ni or 9 to 10wt.% Ni. A preferred alloy includes about 0.005 to 0.5wt.% B, about 1.2 to 1.8wt.% C, about 0.7 to 1.5wt.% V, about 7 to 11wt.% Cr, about 1 to 3.5wt.% Nb, about 6 to 11wt.% Mo, about 4 to 8wt.% Ni, and balance about 60 to 70wt.% Fe and incidental impurities.

Wear resistance of wear and heat resistant alloys was related to hardness and toughness hence microstructure of an alloy. As discussed herein, by modifying a standard J130 alloy to include higher Ni contents, the quench-ability can substantially improved with the added benefit of enhanced bulk hardness, enhanced toughness and significantly improved compressive yield stress properties. In general, higher bulk hardness corresponds to better wear resistance. One of the optimal nickel contents or narrow nickel content range was detected through this investigation with which an enhanced J130 alloy system displayed the highest air quench-ability. The new alloy, J130M with about 3 to 10% Ni, preferably about 4 to 9% Ni and more preferably about 4 to 8% Ni, possessed a sound and sustained bulk hardness, toughness and improved compressive yield stress from ambient through elevated temperature (>800°C).

The operating temperatures for common valve train intake applications is 50 to 350°C (260 to 660°F) and for common valve train exhaust applications is 300 to 600°C (570 to 1110°F).

In the past, J130 has been mostly applied for exhaust applications and more recently, J130 has been tested in a couple of diesel engine platforms for intake application. With the improved properties due to the increase in Ni content, J130M is anticipated to be a good candidate for both intake and exhaust applications.

Although the present invention has been described in connection with preferred embodiments thereof, it will be appreciated by those skilled in the art that additions, deletions, modifications, and substitutions not specifically described may be made without departing from the spirit and scope of the invention as defined in the appended claims.
Below, there is provided a non-exhaustive list of non-limiting examples.

Example 1. An iron-based alloy having a martensitic microstructure including primary and secondary carbides comprising, consisting essentially of, or consisting of, in weight percent:
about 0.005 to 0.5% boron;
about 1.2 to 1.8% carbon;
about 0.7 to 1.5% vanadium;
about 7 to 11% chromium;
about 1 to 3.5% niobium;
about 6 to 11% molybdenum;
about 3 to 10% nickel; and
balance including about 60 to 80% iron and incidental impurities.

Example 2. The iron-based alloy of example 1, wherein the alloy is tungsten-free and the nickel content is about 4 to 9%.

Example 3. The iron-based alloy of example 1 or according to any of the preceding examples, further comprising, consisting essentially of, or consisting of, between up to about 1.6% Si and/or up to about 2% Mn.

Example 4. The iron-based alloy of example 1 or according to any of the preceding examples, wherein the boron content is about 0. 1 to 0.3% and the iron content is about 60 to 70%.

Example 5. The iron-based alloy of example 1 or according to any of the preceding examples, wherein the carbon content is about 1.4 to 1.8% and the nickel content is about 4 to 8%.

Example 6. The iron-based alloy of example 1 or according to any of the preceding examples, wherein the vanadium content is about 0.8 to 1%.

Example 7. The iron-based alloy of example 1 or according to any of the preceding examples, wherein the chromium content is about 9 to 11%.

Example 8. The iron-based alloy of example 1 or according to any of the preceding examples, wherein the niobium content is about 1 to 2.5%.

Example 9. The iron-based alloy of example 1 or according to any of the preceding examples, wherein the molybdenum content is about 8 to 10%.

Example 10. The iron-based alloy of example 1 or according to any of the preceding examples, further comprising, consisting essentially of, or consisting of, up to about 4% cobalt.

Example 11. The iron-based alloy of example 1 or according to any of the preceding examples, further comprising, consisting essentially of, or consisting of, about 1.5 to 2.5% cobalt.

Example 12. The iron-based alloy of example 11, wherein copper is substituted partially or completely for cobalt.

Example 13. The iron-based alloy of example 1 or according to any of the preceding examples, wherein the contents, in weight percent, of the boron, vanadium and niobium are represented by B, V and Nb, respectively, and satisfy the following condition: 1.9%<(B+V+Nb)<4.3%.

Example 14. The iron-based alloy of example 1 or according to any of the preceding examples, wherein the incidental impurities are less than 3.5%, or less than 1.5%.

Example 15. The iron-based alloy of example 1 or according to any of the examples 1 to 13, wherein the incidental impurities are above 1% and below 3.5%.

Example 16. The iron-based alloy of example 14 or example 15, wherein the incidental impurities comprise or consist of one or more of phosphorous, sulfur, and nitrogen.

Example 17. The iron-based alloy of example 1 or according to any of the preceding examples, wherein the niobium content is replaced or combined with titanium, zirconium, hafnium and/or tantalum such that 1%<(Ti+Zr+Nb+Hf+Ta)≦3.5.

Example 18. The iron-based alloy of example 1, consisting essentially of, or consisting of, in weight percent:
about 0.005 to 0.5% boron;
about 1.2 to 1.8% carbon;
about 0.7 to 1.5% vanadium;
about 7 to 11% chromium;
about 1 to 3.5% niobium;
about 6 to 11% molybdenum;
about 3 to 10% nickel;
up to about 1.6% Si;
up to about 2% Mn;
up to about 4% cobalt;
up to about 0.02% phosphorus;
up to about 0.02% sulfur;
up to about 0.07% nitrogen; and
balance including about 60 to 80% iron and incidental impurities.

Example 19. The iron-based alloy of example 1, consisting essentially of, or consisting of, in weight percent:
about 0.005 to 0.5% boron;
about 1.2 to 1.8% carbon;
about 0.7 to 1.5% vanadium;
about 7 to 11% chromium;
about 1 to 3.5% niobium;
about 6 to 11% molybdenum;
about 3 to 10% nickel;
up to about 1.6% Si;
up to about 2% Mn;
up to about 4% cobalt;
up to about 0.02% phosphorus;
up to about 0.02% sulfur;
up to about 0.07% nitrogen;
wherein the niobium content can be replaced or combined with titanium, zirconium, hafnium
and/or tantalum such that 1%<(Ti+Zr+Nb+Hf+Ta)≦3.5; and
balance including about 60 to 80% iron.

Example 20. The iron-based alloy of example 1, consisting essentially of, or consisting of, in weight percent:
about 0.005 to 0.5% boron;
about 1.2 to 1.8% carbon;
about 0.7 to 1.5% vanadium;
about 7 to 11% chromium;
about 1 to 3.5% niobium;
about 6 to 11% molybdenum;
about 3 to 10% nickel;
up to about 1.6% Si;
up to about 2% Mn;
up to about 4% cobalt;
up to about 0.02% phosphorus;
up to about 0.02% sulfur;
up to about 0.07% nitrogen;
wherein the niobium content can be replaced or combined with titanium, zirconium, hafnium and/or tantalum such that 1%<(Ti+Zr+Nb+Hf+Ta)≦3.5; and
balance including about 60 to 80% iron and incidental impurities.

Example 21. The iron-based alloy of example 1 or according to any of the preceding examples, wherein the alloy is in a hardened and tempered condition.

Example 22. The iron-based alloy of example 21, wherein the primary carbides have a width smaller than about 10 microns and the secondary carbides are smaller than about 1 micron.

Example 23. The iron-based alloy of example 1 or according to any of the preceding examples, wherein the alloy is in the form of a casting.

Example 24. The iron-based alloy of example 1 or according to any of the preceding examples, wherein the alloy is in a hardened and tempered condition having a hardness of at least about 42 Rockwell C.

Example 25. The iron-based alloy of example 1 or according to any of the preceding examples, wherein the alloy is in a hardened and tempered condition and exhibits a Vickers hot hardness at a temperature of 800° F. of at least about 475.

Example 26. The iron-based alloy of example 1 or according to any of the preceding examples, wherein the alloy is in a hardened and tempered condition and exhibits a high temperature compressive yield strength at 800° F. of at least about 100 ksi.

Example 27. The iron-based alloy of example 1 or according to any of the preceding examples, wherein the alloy exhibits a dimensional stability of less than about 0.5×10-3 inches after 20 hours at 1200° F.

Example 28. A part for an internal combustion engine comprising the iron-based alloy of example 1 or according to any of the preceding examples.

Example 29. A valve seat insert comprising the iron-based alloy of example 1 or according to any of the examples 1 to 27.

Example 30. A valve seat insert for a diesel engine comprising the iron-based alloy of example 1 or according to any of the examples 1 to 27.

Example 31. A valve seat insert for a diesel engine using EGR comprising the iron-based alloy of example 1 or according to any of the examples 1 to 27.

Example 32. A valve seat insert comprising the iron-based alloy of example 1 or according to any of the examples 1 to 27, wherein the valve seat insert is in the form of a casting.

Example 33. A valve seat insert comprising the iron-based alloy of example 1 or according to any of the examples 1 to 27, wherein the valve seat insert is in the form of a pressed and sintered compact.

Example 34. A valve seat insert having a coating of the iron-based alloy of example 1 or according to any of the examples 1 to 27.

Example 35. A valve seat insert comprising the iron-based alloy of example 1 or according to any of the examples 1 to 27, having a Vickers hardness of at least about 475 and a compressive yield strength of at least about 190 ksi at a temperature of 800° F.

Example 36. A ball bearing comprising the alloy of example 1 or according to any of the examples 1 to 27.

Example 37. A cast iron-based tungsten-free alloy having a martensitic microstructure including primary and secondary carbides comprising, consisting essentially of, or consisting of, in weight percent:
about 0.1 to 0.3% boron; about 1.4 to 1.8% carbon; about 0.7 to 1.3% silicon, about 0.8 to 1.5% vanadium; about 9 to 11% chromium; about 0.2 to 0.7% manganese; about 0 to 4% cobalt; about 3 to 10% nickel; about 1 to 2.5% niobium; about 8 to 10% molybdenum, and the balance including about 60 to 80% iron and incidental impurities.

Example 38. A method of making an iron-based alloy comprising, consisting essentially of, or consisting of, in weight percent:
about 0.005 to 0.5% boron; about 1.2 to 1.8% carbon; about 0.7 to 1.5% vanadium; about 7 to 11% chromium; about 1 to 3.5% niobium; about 6 to 11% molybdenum, about 3 to 10% nickel and the balance including about 60 to 80% iron and incidental impurities, wherein the alloy is cast from a melt at a temperature of from about 2800 to 3000° F.

Example 39. The method of example 38, wherein the alloy is cast from a melt at a temperature of from about 2850 to 2925° F.

Example 40. A method of making an iron-based alloy comprising, consisting essentially of, or consisting of, in weight percent:
about 0.005 to 0.5% boron; from about 1.2 to 1.8% carbon; about 0.7 to 1.5% vanadium; about 7 to 11% chromium; about 1 to 3.5% niobium; about 6 to 11% molybdenum, about 3 to 10% nickel and the balance including about 60 to 80% iron and incidental impurities, wherein the alloy is heated at a temperature of from about 1550 to 2100° F., quenched and tempered at a temperature of from about 1200 to 1400° F.

Example 41. An iron-based alloy having a martensitic microstructure including primary and secondary carbides comprising, consisting essentially of, or consisting of, in weight percent:
about 0.005 to 0.5% boron; about 1.2 to 1.8% carbon; about 0.7 to 1.5% vanadium; about 7 to 11% chromium; about 6 to 11% molybdenum; about 3 to 10% nickel, at least one element selected from the group consisting of titanium, zirconium, niobium, hafnium and tantalum, represented by Ti, Zr, Nb, Hf and Ta, respectively, and the balance including about 60 to80% iron and incidental impurities, such that 1%<(Ti+Zr+Nb+Hf+Ta)<3.5%.

## Claims

1. An iron-based alloy having a martensitic microstructure including primary and secondary carbides comprising, in weight percent:
about 0.005 to 0.5% boron;
about 1.2 to 1.8% carbon;
about 0.7 to 1.5% vanadium;
about 7 to 11% chromium;
about 1 to 3.5% niobium;
about 6 to 11% molybdenum;
about 3 to 10% nickel; and
balance including about 60 to 80% iron and incidental impurities.

2. The iron-based alloy of claim 1, wherein the alloy is tungsten-free and the nickel content is about 4 to 9%.

3. The iron-based alloy of claim 1, further comprising between up to about 1.6% Si and/or up to about 2% Mn.

4. The iron-based alloy of claim 1, wherein the boron content is about 0. 1 to 0.3% and the iron content is about 60 to 70%; or wherein the carbon content is about 1.4 to 1.8% and the nickel content is about 4 to 8%; or wherein the vanadium content is about 0.8 to 1%; or wherein the chromium content is about 9 to 11%; or wherein the niobium content is about 1 to 2.5%; or wherein the molybdenum content is about 8 to 10%.

5. The iron-based alloy of claim 1, further comprising up to about 4% cobalt, preferably about 1.5 to 2.5% cobalt; or about 1.5 to 2.5% cobalt wherein copper is substituted partially or completely for cobalt.

6. The iron-based alloy of claim 1, wherein the contents, in weight percent, of the boron, vanadium and niobium are represented by B, V and Nb, respectively, and satisfy the following condition: 1.9%<(B+V+Nb)<4.3%.

7. The iron-based alloy of claim 1, wherein the alloy is in a hardened and tempered condition, preferably wherein the primary carbides have a width smaller than about 10 microns and the secondary carbides are smaller than about 1 micron; or wherein the alloy is in the form of a casting; or wherein the alloy is in a hardened and tempered condition having a hardness of at least about 42 Rockwell C; or wherein the alloy is in a hardened and tempered condition and exhibits a Vickers hot hardness at a temperature of 800° F. of at least about 475; or wherein the alloy is in a hardened and tempered condition and exhibits a high temperature compressive yield strength at 800° F. of at least about 100 ksi; or wherein the alloy exhibits a dimensional stability of less than about 0.5×10-3 inches after 20 hours at 1200° F.

8. A part for an internal combustion engine comprising the iron-based alloy of claim 1, preferably wherein the part for an internal combustion engine is a valve seat insert, more preferably wherein the valve seat insert is for a diesel engine, even more preferably wherein the valve seat insert is for a diesel engine using EGR.

9. A valve seat insert comprising the iron-based alloy of claim 1, wherein the valve seat insert is in the form of a casting; or wherein the valve seat insert is in the form of a pressed and sintered compact.

10. A valve seat insert having a coating of the iron-based alloy of claim 1; or a valve seat insert comprising the iron-based alloy of claim 1, having a Vickers hardness of at least about 475 and a compressive yield strength of at least about 190 ksi at a temperature of 800° F.

11. A ball bearing comprising the alloy of claim 1.

12. A cast iron-based tungsten-free alloy having a martensitic microstructure including primary and secondary carbides comprising, in weight percent:
about 0.1 to 0.3% boron; about 1.4 to 1.8% carbon; about 0.7 to 1.3% silicon, about 0.8 to 1.5% vanadium; about 9 to 11% chromium; about 0.2 to 0.7% manganese; about 0 to 4% cobalt; about 3 to 10% nickel; about 1 to 2.5% niobium; about 8 to 10% molybdenum, and the balance including about 60 to 80% iron and incidental impurities.

13. A method of making an iron-based alloy comprising in weight percent:
about 0.005 to 0.5% boron; about 1.2 to 1.8% carbon; about 0.7 to 1.5% vanadium; about 7 to 11% chromium; about 1 to 3.5% niobium; about 6 to 11% molybdenum, about 3 to 10% nickel and the balance including about 60 to 80% iron and incidental impurities, wherein the alloy is cast from a melt at a temperature of from about 2800 to 3000° F, preferably wherein the alloy is cast from a melt at a temperature of from about 2850 to 2925° F.

14. A method of making an iron-based alloy comprising in weight percent:
about 0.005 to 0.5% boron; from about 1.2 to 1.8% carbon; about 0.7 to 1.5% vanadium; about 7 to 11% chromium; about 1 to 3.5% niobium; about 6 to 11% molybdenum, about 3 to 10% nickel and the balance including about 60 to 80% iron and incidental impurities, wherein the alloy is heated at a temperature of from about 1550 to 2100° F., quenched and tempered at a temperature of from about 1200 to 1400° F.

15. An iron-based alloy having a martensitic microstructure including primary and secondary carbides comprising, in weight percent:
about 0.005 to 0.5% boron; about 1.2 to 1.8% carbon; about 0.7 to 1.5% vanadium; about 7 to 11% chromium; about 6 to 11% molybdenum; about 3 to 10% nickel, at least one element selected from the group consisting of titanium, zirconium, niobium, hafnium and tantalum,
represented by Ti, Zr, Nb, Hf and Ta, respectively, and the balance including about 60 to80% iron and incidental impurities, such that 1%<(Ti+Zr+Nb+Hf+Ta)<3.5%.
